# EUROPÄISCHE PATENTANMELDUNG

(11) **EP 2 042 835 A2**
(43) Veröffentlichungstag der Anmeldung: **01.04.2009**
(21) Anmeldenummer: 08105145.0
(22) Anmeldetag: 27.08.2008
(51) Int. Cl.: G01C 21/36

(54) **Steuereinrichtung und Verfahren zur Ausgabe einer Navigationsanweisung durch ein Vibrationssignal an einen Nutzer zur Routenführung**

(30) Priorität: 26.09.2007 DE 102007046221
(71) Anmelder: ROBERT BOSCH GMBH, 70442 Stuttgart (DE)
(72) Erfinder: Vogel, Andreas, 31139, Hildesheim (DE)

(57) **Zusammenfassung**

Die Erfindung betrifft ein Verfahren zur Ausgabe einer Navigationsanweisung durch ein Vibrationssignal an einen Nutzer zur Routenführung des Nutzers in einem Wegenetz, wobei eine Position des Nutzers in dem Wegenetz festgestellt wird, wobei eine durch den Nutzer einzunehmende Bewegungsrichtung an der festgestellten Position in dem Wegenetz zur Einhaltung einer Route festgestellt wird, wobei eine räumliche Ausrichtung des Nutzers festgestellt wird,
**dadurch gekennzeichnet, dass** in Abhängigkeit einer Abweichung der Ausrichtung des Nutzers von der durch den Nutzer einzunehmenden Bewegungsrichtung eine Variation des Vibrationssignals erfolgt.

## Beschreibung

### Stand der Technik

Die Erfindung geht aus von einer Steuereinrichtung oder einem Verfahren nach Gattung der unabhängigen Ansprüche. Aus der EP 1 614 992 A1 ist bereits eine Navigationseinrichtung für Fußgänger bekannt, bei welcher Navigationsanweisungen mittels Vibrationssignalen ausgegeben werden.
Anhand der aktuellen Position eines Nutzers wird ermittelt, ob die Ausgabe einer Navigationsanweisung an den Nutzer notwendig ist, so dass der Nutzer im Falle einer notwendigen Navigationsanweisung diese mittels eines Vibrationssignals ausgegeben bekommt. Hierbei ist es möglich, dass dem Nutzer unterschiedliche Navigationsanweisungen durch Vibrationssignale unterschiedlicher Vibrationsmuster signalisiert werden. Nähert sich der Nutzer einem Punkt entlang einer Route, an welchem eine Navigationsanweisung notwendig ist, so kann diese Navigationsanweisung in Form eines Vibrationssignals bereits dann an den Nutzer ausgegeben werden, wenn der Nutzer sich in einer gewissen Distanz zu diesem Punkt befindet.

### Offenbarung der Erfindung

### Vorteile der Erfindung

Die erfindungsgemäße Steuereinrichtung und das erfindungsgemäße Verfahren mit den Merkmalen der unabhängigen Ansprüche haben dem gegenüber den Vorteil, dass zusätzlich zu der Position des Nutzers und der durch den Nutzer einzunehmenden Bewegungsrichtung an einer festgestellten Position eine räumliche Ausrichtung des Nutzer festgestellt wird, so dass in Abhängigkeit einer Abweichung der Ausrichtung des Nutzers von der durch den Nutzer einzunehmenden Bewegungsrichtung eine Variation des Vibrationssignals erfolgt.

Nähert sich ein Nutzer in einem Wegenetz entlang einer Route einer Position, in welcher es notwendig ist, dass der Nutzer seine Bewegungsrichtung zur Einhaltung der Route ändert, so ist es vorzugsweise möglich, eine Navigationsanweisung mittels eines Vibrationssignals an den Nutzer bereits vor Erreichen der Position anzuzeigen. Befindet sich der Nutzer an jener Position, an welcher er zur Einhaltung der Route seine räumliche Ausrichtung mit der einzunehmenden Bewegungsrichtung in Übereinstimmung bringen muss, so wird erfindungsgemäß dem Nutzer die Navigationsanweisung in Form eines variierenden Vibrationssignals derart angezeigt, dass die Variation des Vibrationssignal in Abhängigkeit der Abweichung der Ausrichtung des Nutzers von der einzunehmenden Bewegungsrichtung erfolgt. Dies ist vorteilhaft, da dem Nutzer bei einer Variation seiner Ausrichtung mittels des Vibrationssignals angezeigt wird, ob seine Ausrichtung zunehmend oder abnehmend mit der einzunehmenden Bewegungsrichtung übereinstimmt.

Gemäß einer Ausgestaltung des Verfahrens wird die Navigationsanweisung an den Nutzer mittels der Variation des Vibrationssignals anhand einer variierenden Intensität des Vibrationssignals ausgegeben. Dies ist vorteilhaft, da der Nutzer bei einer Variation seiner Ausrichtung durch eine ansteigende oder abfallende Intensität des Vibrationssignals auf einfache Weise eine Rückmeldung erhält, ob die von ihm vorgenommene Variation der Ausrichtung zu einer stärkeren oder schwächeren Übereinstimmung mit der durch ihn einzunehmenden Bewegungsrichtung übereinstimmt.

Insbesondere ist es möglich, dass mit abnehmender Abweichung der Ausrichtung des Nutzers von der durch den Nutzer einzunehmenden Bewegungsrichtung die Intensität des Vibrationssignals abnimmt. Dies ist vorteilhaft, da der Nutzer bei einer Variation seiner Ausrichtung dann eine stärkere Rückmeldung in Form eines Vibrationssignals geringerer Intensität erhält, wenn er eine geringere Übereinstimmung seiner Ausrichtung mit der durch ihn einzunehmenden Bewegungsrichtung herbeiführt.

Vorzugsweise ist es möglich, dass im Falle einer hinreichend genauen Übereinstimmung der Ausrichtung des Nutzers mit der durch den Nutzer einzunehmenden Bewegungsrichtung dies durch ein Ausbleiben des Variationssignals angezeigt wird. Dies ist vorteilhaft, da im Falle einer hinreichend genauen Übereinstimmung der Ausrichtung des Nutzers und der durch ihn einzunehmenden Bewegungsrichtung keine weitere Navigationsanweisung an den Nutzer zur Änderung seiner Ausrichtung notwendig ist.

Beispielsweise ist es möglich, dass die Variation des Vibrationssignals anhand unterschiedlicher Vibrationsfrequenzen erfolgt. Dies ist vorteilhaft, da durch eine Veränderung der Vibrationsfrequenz dem Nutzer eine zunehmende oder abnehmende Übereinstimmung seiner Ausrichtung mit der von ihm einzunehmenden Bewegungsrichtung angezeigt werden kann.

Die Steuereinrichtung, die Zielführungseinrichtung und die Verwendung einer Zielführungseinrichtung zur Durchführung des erfindungsgemäßen Verfahrens weisen ebenfalls die zuvor genannten Vorteile des Verfahrens auf.

### Kurze Beschreibung der Zeichnungen

Ausführungsbeispiele der Erfindung sind in den Zeichnungen dargestellt und in der nachfolgenden Beschreibung näher erläutert.

Figur 1, Figur 2 und Figur 3 zeigen jeweils eine Position eines Nutzers, eine Ausrichtung eines Nutzers sowie eine einzuhaltende Route in einem Wegenetz gemäß eines Ausführungsbeispieles.

Figur 4 zeigt eine Darstellung eines Verlaufs der Vibrationsintensität des Vibrationssignals gemäß eines Ausführungsbeispieles der Erfindung.

Figur 5 zeigt eine erfindungsgemäße Steuereinrichtung.

Figur 6 zeigt eine erfindungsgemäße Zielführungseinrichtung.

### Ausführungsformen der Erfindung

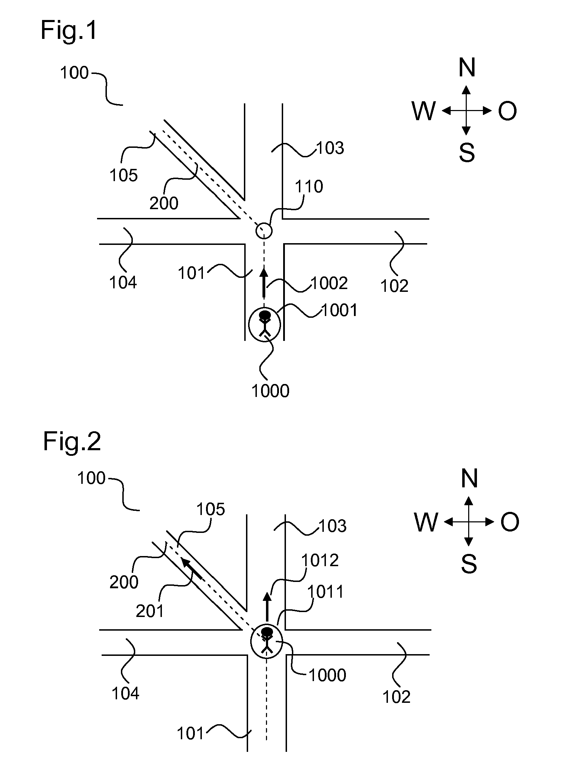

Figur 1 zeigt eine Kreuzung 100 in einem Wegenetz mit fünf von der Kreuzung 100 abgehenden Wegen. Die Kreuzung 100 weist einen ersten Weg 101 in südlicher Richtung, einen Weg zweiten 102 in östlicher Richtung, einen dritten Weg 103 in nördlicher Richtung, einen vierten Weg 104 in westlicher Richtung sowie einen fünften Weg 105 in nordwestlicher Richtung auf. Gezeigt ist ferner in Form einer gestrichelten Linie eine Route 200, welche entlang des ersten, südlichen Weges 101 zur Kreuzung 100 hin und dann von der Kreuzung 100 weg entlang des fünften, nordwestlichen Weges 105 führt.

Der Nutzer 1000 befindet sich an einer ersten Position 1001 auf dem ersten, südlichen Weg 101 in Abstand zur Kreuzungsmitte 110. Seine Ausrichtung 1002 zeigt in nördliche Richtung, dargestellt durch einen Pfeil. Nähert sich der Nutzer 1000 der Kreuzungsmitte 110, so ist es vorzugsweise möglich, dem Nutzer anhand der von ihm mitgeführten Zielführungseinrichtung mittels eines Vibrationssignals eine Navigationsanweisung anzuzeigen, damit die Route 200 von ihm eingehalten wird. Vorzugsweise ist es möglich, durch unterschiedliche Vibrationssignale dem Nutzer 1000 bereits vor Erreichen der Kreuzungsmitte 110 eine Navigationsanweisung zu signalisieren, welche ihn veranlassen soll, entlang der Route 200 den nordwestlichen Weg 105 abzubiegen.

Die Figur 2 zeigt ebenfalls die Kreuzung 100 zusammen mit dem ersten Weg 101, dem zweiten Weg 102, dem dritten Weg 103, dem vierten Weg 104 sowie dem fünften Weg 105. Gemäß Figur 2 befindet sich der Nutzer 1000 an einer Position 1011, welche mit der Kreuzungsmitte 110 der Kreuzung 100 des Wegenetzes übereinstimmt. Die Ausrichtung 1012 des Nutzers 1000 zeigt hierbei in nördliche Richtung.

Erfindungsgemäß wird zunächst eine Position 1001, 1011 des Nutzers 1000 in dem Wegenetz festgestellt sowie eine durch den Nutzer 1000 einzunehmende Bewegungsrichtung an der festgestellten Position 1001, 1011 in dem Wegenetz zur Einhaltung einer Route. Zusätzlich wird erfindungsgemäß eine räumliche Ausrichtung des Nutzers 1000 festgestellt, so dass eine Navigationsanweisung durch ein Vibrationssignal an den Nutzer 1000 derart ausgegeben wird, dass in Abhängigkeit einer Abweichung der Ausrichtung des Nutzers 1000 von der durch den Nutzer einzunehmenden Bewegungsrichtung eine Variation des Vibrationssignals erfolgt. Dies kann vorzugsweise dann erfolgen, wenn der Nutzer sich an einer Position 1011 befindet, an welcher eine Änderung seiner Ausrichtung notwendig ist.

Gemäß des Ausführungsbeispieles in Figur 2 ist es notwendig, dass der Nutzer 1000 zur Einhaltung der Route 200 seine Ausrichtung 1012 derart ändert, dass diese mit der einzunehmenden Bewegungsrichtung 201 in nordwestlicher Richtung, dargestellt in Figur 2 durch einen Pfeil, in Übereinstimmung bringt, da die Route 200 ab der Kreuzungsmitte 110 entlang des fünften Weges 105 in nordwestlicher Richtung führt. Befindet sich der Nutzer 1000 an der Position 1012, welche mit der Kreuzungsmitte 110 übereinstimmt, so wird eine Navigationsanweisung durch ein Vibrationssignal an den Nutzer 1000 ausgegeben. Erfindungsgemäß variiert das Vibrationssignal in Abhängigkeit der Abweichung der Ausrichtung 1012 des Nutzers 1000 von der durch den Nutzer 1000 einzunehmenden Bewegungsrichtung 201. Hierdurch ist es dem Nutzer 1000 möglich zu erkennen, ob er eine Änderung seiner Ausrichtung 1012 vornehmen muss, um die Route 200 einzuhalten. Wird dem Nutzer 1000 beispielsweise an der Position 1001 vor Erreichen der Kreuzungsmitte 110 über ein Vibrationssignal eine Navigationsanweisung derart angezeigt, dass er in nordwestlicher Richtung abbiegen soll, so ist es denkbar, dass aufgrund der Vielzahl möglicher auszugebender Navigationsanweisungen das entsprechende Vibrationssignal nicht genau vom Nutzer 1000 verstanden wird, da er diese nicht exakt unterscheiden könnte. Daher kann es möglicherweise für den Nutzer 1000 unklar sein, ob er an der Kreuzungsmitte 110 in westlicher Richtung in den vierten, westlichen Weg 104 abbiegen muss oder ob er in nordwestlicher Richtung in den fünften, nordwestlichen Weg 105 abbiegen muss. Dieses wird durch das erfindungsgemäße Verfahren bei Erreichen der Kreuzungsmitte 110 dem Nutzer 1000 durch eine Variation des Vibrationssignals angezeigt. Vorzugsweise kann dies auch bereits kurz vor Erreichen der Kreuzungsmitte 110 dem Nutzer 1000 angezeigt werden.

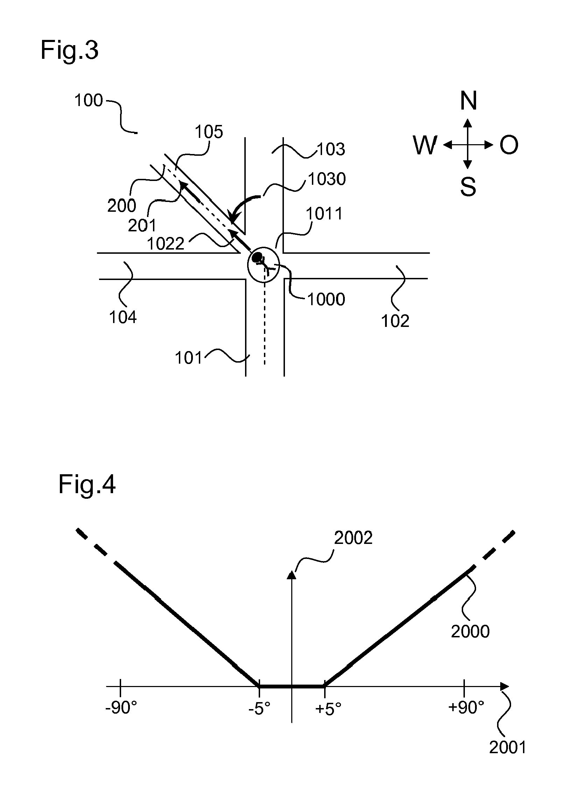

Die Figur 3 zeigt ebenfalls die Kreuzung 100 zusammen mit dem ersten Weg 101, dem zweiten Weg 102, dem dritten Weg 103, dem vierten Weg 104 sowie dem fünften Weg 105. Gemäß Figur 3 befindet sich der Nutzer 1000 an der Position 1011, welche mit der Kreuzungsmitte 110 der Kreuzung 100 des Wegenetzes übereinstimmt. Die Ausrichtung 1022 des Nutzers 1000 zeigt hierbei in nordwestliche Richtung.

Variiert der Nutzer 1000 an der Position 1011, welche mit der Kreuzungsmitte 110 übereinstimmt, seine Ausrichtung in nördlicher Richtung 1012 aus Figur 2 in eine Ausrichtung in nordwestlicher Richtung 1022 wie in Figur 3 dargestellt, so wird der Nutzer 1000 vorzugsweise durch eine Variation des Vibrationssignals in Abhängigkeit seiner Ausrichtung 1012, 1022 von der einzunehmenden Bewegungsrichtung 201 darüber informiert, ob und in welchem Maße seine Ausrichtung 1012, 1022 mit der einzunehmenden Bewegungsrichtung übereinstimmt. Hat der Nutzer 1000 seine Ausrichtung in nördlicher Richtung 1012 in eine Ausrichtung 1022 in nordwestlicher Richtung durch eine Drehung 1030 in nordwestliche Richtung geändert, welche zu einer Einhaltung der Route 200 führt, so kann der Nutzer 1000 anschließend seine Fortbewegung fortführen, welche ihn entlang der Route 200 führt.

Vorzugsweise ist es möglich, dass die Variation des Vibrationssignals anhand einer variierenden Intensität des Vibrationssignals erfolgt. Hierdurch kann der Nutzer 1000 bei einer Veränderung seiner Ausrichtung 1012, 1022 auf einfache Art und Weise feststellen, ob seine Ausrichtung 1012, 1022 mit der einzunehmenden Bewegungsrichtung 201 übereinstimmt.

Ferner ist es beispielsweise möglich, dass mit abnehmender Abweichung der Ausrichtung 1012, 1022 von der einzunehmenden Bewegungsrichtung 201 die Intensität des Vibrationssignals abnimmt. Führt der Nutzer 1000 also eine Ausrichtung 1022 herbei, welche mit der einzunehmenden Bewegungsrichtung 201 stärker übereinstimmt, als seine vorherige Ausrichtung 1012, so wird ihm dies durch eine Verringerung der Intensität des Vibrationssignals angezeigt.

Ferner ist es vorzugsweise möglich, dass im Falle einer hinreichend genauen Übereinstimmung der Ausrichtung 1022 des Nutzers 1000 mit der einzunehmenden Bewegungsrichtung 201 dies durch ein Ausbleiben des Vibrationssignals dem Nutzer 1000 angezeigt wird. Hat der Nutzer 1000 seine Ausrichtung in nördlicher Richtung 1012 hinreichend stark geändert zu der Ausrichtung in nordwestliche Richtung 1022, so dass diese hinreichend genau mit der einzunehmenden Bewegungsrichtung 201 übereinstimmt, so ist der Nutzer 1000 über diese hinreichend genaue Übereinstimmung dadurch informiert, dass das Vibrationssignal ausbleibt.

Figur 4 zeigt eine beispielhafte Kennlinie 2000 für den Intensitätsverlauf des Vibrationssignals in Abhängigkeit einer Abweichung der Ausrichtung 1012, 1022 von der einzunehmenden Bewegungsrichtung 201.

In Figur 4 ist ein kartesisches Koordinatensystem gezeigt, auf dessen Abszisse 2001 die Abweichung der Ausrichtung 1012, 1022 des Nutzers 1000 von der einzunehmenden Bewegungsrichtung 201 in Gradzahlen aufgetragen ist. Auf der Ordinate 2002 ist die Intensität des Vibrationssignals aufgetragen. Die Kennlinie 2000 der Vibrationsintensität 2002 verläuft derart, dass die Vibrationsintensität im Bereich zwischen -5° und +5° Null ist. Ausgehend von +5° mit ansteigender Gradzahl erhöht sich auch die Vibrationsintensität 2002. Ausgehend von -5° mit weiter abfallender Gradzahl steigt die Vibrationsintensität 2002 ebenfalls an. Die Die Kennlinie 2000 ist in Figur 4 vorzugsweise für einen Wertebereich der Abweichung von -90° bis +90° dargestellt. Vorzugsweise besteht die Möglichkeit, eine Kennlinie zu definieren, welche für einen Wertebereich der Abweichung von -180° bis +180° die Vibrationsintensität 2002 angibt, so dass es beispielsweise möglich ist, dem Nutzer 1000 im Zuge einer vollständigen Rotation um seine eigene Achse jeweils eine Abweichung in Form eines Vibrationssignals unterschiedlicher Intensität anzuzeigen.

Vorzugsweise ist es möglich, dass die Variation des Vibrationssignals anhand unterschiedlicher Vibrationsfrequenzen erfolgt. Hierdurch kann der Nutzer 1000 zusätzlich durch eine Variation der Frequenz auf eine Abweichung seiner Ausrichtung 1012, 1022 von der einzunehmenden Bewegungsrichtung 201 aufmerksam gemacht werden.

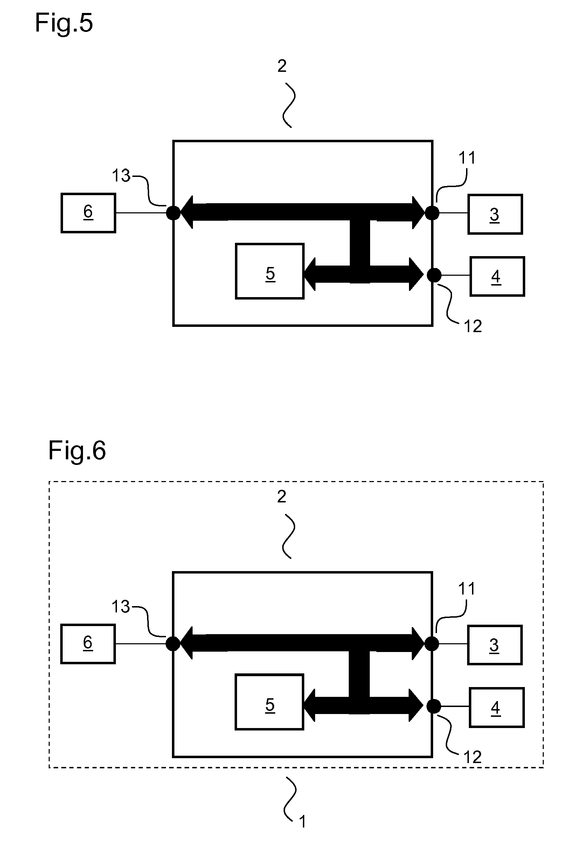

Die erfindungsgemäße Steuereinrichtung 2 ist in Figur 5 dargestellt. Die Steuereinrichtung 2 weist eine erste Schnittstelle 11 zu einer Positionsbestimmungseinheit 3 auf. Die Positionsbestimmungseinheit 3 ist zur Bestimmung einer Position eines Nutzers 1000 in einem Wegenetz geeignet. Die Steuereinrichtung 2 weist ferner eine zweite Schnittstelle 12 zu einer Richtungsbestimmungseinheit 4 auf. Die Richtungsbestimmungseinheit 4 ist zur Bestimmung einer räumlichen Ausrichtung 1002, 1012, 1022 des Nutzers 1000 geeignet. Die Steuereinrichtung 2 weist ferner eine Recheneinheit 5 auf, welche zur Feststellung einer durch den Nutzer 1000 einzunehmenden Bewegungsrichtung 201 an der festgestellten Position 1011 in dem Wegenetz zur Einhaltung einer Route 200 geeignet ist.

Die erfindungsgemäße Steuereinrichtung 2 ist dadurch gekennzeichnet, dass die Steuereinrichtung 2 eine Schnittstelle 13 zu einer Vibrationseinheit 6 aufweist. Erfindungsgemäß steuert die Steuereinrichtung 2 die Vibrationseinheit 6 zur Ausgabe einer Navigationsanweisung in Form eines Vibrationssignals derart an, dass das Vibrationssignal in Abhängigkeit von einer Abweichung der Ausrichtung 1012, 1022 des Nutzers 1000 mit der durch den Nutzer 1000 einzunehmenden Bewegungsrichtung 201 ausgegeben wird.

Figur 6 zeigt eine erfindungsgemäße Zielführungseinrichtung 1, welche die Steuereinrichtung 2 und die Vibrationseinheit 6 aufweist.

Vorzugsweise ist es möglich, dass es sich bei der Positionsbestimmungseinheit 3 um eine GPS-Einheit handelt. Bei der Richtungsbestimmungseinheit 4 kann es sich vorzugsweise um einen Magnetfeldsensor und/oder ein Gyroskop handeln. Die Verwendung mehrerer Magnetfeldsensoren sowie mehrerer Gyroskope ist ebenfalls vorzugsweise möglich.

Die Schnittstelle 11 zur Positionsbestimmungseinheit 3 sowie die Schnittstelle 12 zur Richtungsbestimmungseinheit 4 können vorzugsweise elektrische Verbindungen darstellen. Ebenso können dies vorzugsweise Datenschnittstellen sein, welche beispielsweise in Form eines CAN-Busses, eines USB-Anschlusses, einer seriellen Schnittstelle, einer drahtlosen Datenschnittstelle oder einer anderen Form einer Datenschnittstelle ausgebildet sind.

Die Steuereinrichtung 2 weist eine Recheneinheit 5 zur Feststellung einer durch den Nutzer 1000 einzunehmenden Bewegungsrichtung 201 auf. Die Recheneinheit 5 ist vorzugsweise als CPU ausgebildet. Ferner ist es möglich, die Recheneinheit vorzugsweise als Mikroprozessor oder als andere Form einer Recheneinheit zur Datenverarbeitung auszubilden.

Zur Ausgabe einer Navigationsanweisung an den Nutzer 1000 weist die Steuereinrichtung 2 eine dritte Schnittstelle 13 auf, über welche die Steuereinrichtung 2 mit der Vibrationseinheit 6 in Verbindung steht. Vorzugsweise ist es möglich, dass die Steuereinrichtung 2 über eine elektrische Verbindung Energie an die Vibrationseinheit 6 überträgt, so dass die Vibrationseinheit 6 ein Vibrationssignal erzeugt. Ebenso ist es vorzugsweise möglich, dass die dritte Schnittstelle 13 eine Datenschnittstelle zur Verbindung einer Steuereinrichtung 2 mit der Vibrationseinheit 6 darstellt. Diese dritte Schnittstelle 13 kann vorzugsweise drahtgebunden oder auch drahtlos zur Datenübertragung ausgebildet sein, wie dies bereits für die erste und die zweite Schnittstelle beschrieben ist.

Wird von der Steuereinrichtung 2 mittels der Recheneinheit 5 ein Ansteuerungssignal über die dritte Schnittstelle 13 an die Vibrationseinheit 6 übertragen, so weist die Vibrationseinheit 6 vorzugsweise eine eigene Energiequelle oder einen Zugang zu einer Energiequelle auf, um das Vibrationssignal zu erzeugen.

Vorzugsweise ist es möglich, die erfindungsgemäße Zielführungseinrichtung als ein Gerät zur Fußgängernavigation auszubilden. Dies kann beispielsweise in Form eines Mobiltelefons oder eines PDAs erfolgen.

Ferner ist es vorzugsweise möglich, die Zielführungseinrichtung als eine Zielführungseinrichtung für ein Fahrzeug auszubilden. In einem solchen Fall ist es beispielsweise möglich, die Vibrationseinheit als eine Vibrationseinheit am Lenkrad oder als eine Vibrationseinheit am Fahrersitz auszubilden.

## Patentansprüche

1. Verfahren zur Ausgabe einer Navigationsanweisung durch ein Vibrationssignal an einen Nutzer zur Routenführung des Nutzers in einem Wegenetz,
wobei eine Position des Nutzers in dem Wegenetz festgestellt wird,
wobei eine durch den Nutzer einzunehmende Bewegungsrichtung an der festgestellten Position in dem Wegenetz zur Einhaltung einer Route festgestellt wird,
wobei eine räumliche Ausrichtung des Nutzers festgestellt wird,
**dadurch gekennzeichnet, dass** in Abhängigkeit einer Abweichung der Ausrichtung des Nutzers von der durch den Nutzer einzunehmenden Bewegungsrichtung eine Variation des Vibrationssignals erfolgt.

2. Verfahren nach Anspruch 1,
**dadurch gekennzeichnet, dass** die Variation des Vibrationssignals anhand einer variierenden Intensität des Vibrationssignals erfolgt.

3. Verfahren nach Anspruch 2,
**dadurch gekennzeichnet, dass** mit abnehmender Abweichung der Ausrichtung des Nutzers von der durch den Nutzer einzunehmenden Bewegungsrichtung die Intensität des Vibrationssignals abnimmt.

4. Verfahren nach Anspruch 2 oder 3 ,
**dadurch gekennzeichnet, dass** im Falle einer hinreichend genauen Übereinstimmung der Ausrichtung des Nutzers mit der durch den Nutzer einzunehmenden Bewegungsrichtung dies durch ein Ausbleiben des Vibrationssignals angezeigt wird.

5. Verfahren nach Anspruch 1 bis 4,
**dadurch gekennzeichnet, dass** die Variation des Vibrationssignals anhand unterschiedlicher Vibrationsfrequenzen erfolgt.

6. Steuereinrichtung (2) für eine Zielführungseinrichtung (1) zur Ausgabe einer Navigationsanweisung durch ein Vibrationssignal, mit einer Schnittstelle (11) zu einer Positionsbestimmungseinheit (3) zur Bestimmung einer Position eines Nutzer in einem Wegenetz, mit einer Schnittstelle (12) zu einer Richtungsbestimmungseinheit (4) zur Bestimmung einer räumlichen Ausrichtung des Nutzers, mit einer Recheneinheit (5) zur Feststellung einer durch den Nutzer einzunehmenden Bewegungsrichtung an der festgestellten Position in dem Wegenetz zur Einhaltung einer Route in dem Wegenetz,
**dadurch gekennzeichnet, dass** die Steuereinrichtung (2) eine Schnittstelle (13) zu einer Vibrationseinheit (6) aufweist und die Vibrationseinheit (6) zur Ausgabe einer Navigationsanweisung in Form eines Vibrationssignals der Art
ansteuert, dass das Vibrationssignal in Abhängigkeit von einer Abweichung der Ausrichtung des Nutzers mit der durch den Nutzer einzunehmenden Bewegungsrichtung ausgegeben wird.

7. Zielführungseinrichtung (1) mit einer Steuereinrichtung (2) nach Anspruch 6,
**dadurch gekennzeichnet, dass** die Vibrationseinheit (6) und die Steuereinrichtung (2) in der Zielführungseinrichtung (1) angeordnet sind.

8. Verwendung einer Zielführungseinrichtung (1) nach Anspruch 7 zur Zielführung von Fußgängern und/oder Fahrzeugen.
